# EUROPEAN PATENT SPECIFICATION

(11) **EP 0 477 127 B1**
(45) Date of publication and mention of the grant of the patent: **14.12.1994**
(21) Application number: 91610077.9
(22) Date of filing: 18.09.1991
(51) Int. Cl.: E04D 7/00, E04B 1/66, F16L 58/12

(54) **Damp-proofing and/or corrosion-protecting membrane for building structures**
Dampfbremsenden und/oder korrosionschutzenden Abdichtung für Baustrukturen
Membrane pare-vapeur et/ou de protection contre la corrosion pour des structures de construction

(30) Priority: 19.09.1990 DK 2259/90
(43) Date of publication of application: 25.03.1992
(73) Proprietor: AS PHONIX CONTRACTORS, 6600 Vejen (DK)
(72) Inventor: Jessen, Erling, DK-6100 Haderslev (DK); Hansen, Pelle J., DK-7100 Vejle (DK); Jorgensen, Hans Erik, DK-6000 Kolding (DK)
(74) Representative: Noergaard, Tage

(56) References cited:
- DE-A- 3 338 885
- FR-A- 2 178 355
- GB-A- 2 052 387
- US-A- 2 787 557
- US-A- 4 820 578
- US-A- 4 870 796

## Description

A method of producing a damp-proofing and/or corrosion-protecting membrane on building structures, such as on roofs, bridges or pipelines, said membrane comprising at least a first material layer of for instance roof felt, a layer of cold flow, damp-proofing and/or corrosion-protecting, reaction-setting, bitumen-based adhesive mixture placed in situ on the first material layer and a second material layer placed on top of the layer of adhesive mixture prior to the setting of the latter, the layer of adhesive mixture being of a thick pasty consistancy as it is laid.

A stripe-shaped covering material is known for the production of joints or sealings and which can form a resistant layer on the outside of building structures. The covering material comprises a coating layer and an "adhesive layer" applied thereon. The adhesive layer is formed by a structure layer, such as of woven fabric, impregnated with reactive bitumen-based adhesive. During the production on a factory, the covering material is subjected to a drying at 30 to 90°C. The ready-made covering material is stored on rolls and kept dry. When the covering material is to be layed out, the roll of covering material is transported to the building structure to be coated, and the bottom side of the covering material is subsequently coated with an activating agent or provided with the second component of a two-component adhesive. As an alternative, the covering material can be subjected to heat. In other words and unlike the present invention, a ready-made, cold flow, damp-proofing adhesive layer is not layed in situ on the building structure to be coated. The production of the known covering material is encumbered with the draw-back that the vapours resulting from the drying of the adhesive at the factory may cause environmental problems. In any case the vapours are very injurious to the persons carrying out the various operations involved in the production of the covering material.

It is also known to produce a damp proof of the above type, which necessitates the use of open fire, which in turn involves considerable environmental problems and unnecessary risks.

US-A-4 820 578 discloses a damp-proofing and corrosion-protecting membrane on building structures. The membrane consists of one material layer (a non-woven material of polyketone) on top of which a layer of corrosion-protecting, reaction-setting, bitumen-based adhesive mixture (hot-mopped asphalt) is placed (in situ). While being placed, the adhesive mixture is of a thick pasty consistancy. On top of the adhesive mixture, a second material layer is laid prior to the setting of the latter. As adhesive mixture it is inter alia suggested to use hot bitumen composed of at least 85-95 wt% asphalt and 15-5 wt% of a SEBS (styrene-epoxy-butadiene-styrene) rubber. The adhesive mixture may also contain toluene.

The object of the present invention is to provide a method of producing a membrane of the above type which reduces the security risks and ensures an improved working environment in connection with the in situ production of the membrane, i.e. avoids the release of possible injurious vapours or fumes, and which in addition is particularly resilient so as to resist formation of cracks.

The method according to the invention is characterised in the features mentioned in the characterising clause of claim 1. As a result, a membrane is obtained which is very lenient to the working environment because when it is laid it will give no rise to injurious vapours from the adhesive applied onto said material layer. The adhesive mixture is often considered the most injurious matter, but the inventive adhesive mixture will not give off vapours of any significance. Solvents have been completely avoided and the remaining components are only very slowly volatile, if volatile at all. As open fire is not used either, no injurious fumes are released. The provided efficient adhering ensures that the ready-made membrane is free of bulges and blisters. In addition, the membrane is very resilient and resistant to cracks and weather conditions.

According to the invention the adhesive mixture may in addition to bitumen comprise blocked bitumen-compatible polyol compounds and a reaction-initiating component in form of polyisocyanate compounds or polyisocyanate prepolymers, which results in a particularly advantageous embodiment of the membrane.

It is advantageous when, according to the invention, the adhesive mixture in addition to bitumen also comprises blocked polyisocyanate compounds or polyisocyanate prepolymers and a reaction-initiating component in form of bitumen-compatible polyoles.

A further advantageous embodiment of the method according to the invention is characterised in that in addition to bitumen the adhesive mixture comprises blocked polyisocyanate and/or blocked amines and/or blocked amine compounds, such as ketimines or alkanol amines with α-β-unsaturated carbonyl compounds, and bitumen-compatible polyisocyanate compounds or polyisocyanate prepolymers or epoxy and/or epoxypolyurethane compounds as reaction-initiating component.

Moreover according to the invention the second material layer may on its bottom side be provided with a reinforcement preferably made of woven or felted bitumen-compatible products, such as polyester tissue, possessing a high resistance to weather effects, and the reinforcement may optionally be impregnated with the same material as the material of the second material layer. As a result the ready-made membrane possesses an improved strength and resistance to weather effects.

Furthermore according to the invention the first material layer may on its top be provided with a second reinforcement preferably made of woven or felted bitumen-compatible products, such as polyester tissue, possessing a high resistance to weather effects, and the reinforcement may optionally be impregnated with the same material as the material of the second material layer. In this manner it is ensured that the ready-made membrane is additionally strengthened and resistant to weather effects.

According to the invention the first material layer may be constituted by an old covering material, such as roof felt, placed a long time ago on the structure where the membrane is to be produced with the result that the membrane according to the invention is particularly lenient to the environment as the old roof felt is reused instead of being discarded and taking up room on a dumping ground.

According to the invention the adhesive mixture may be layed out in a thickness of 30 to 70% of the total thickness of the membrane, whereby the membrane is suitably strong without requiring much material.

Moreover according to the invention the adhesive mixture may be layed in a thickness of 45 to 55%, preferably approximately 50%, of the total thickness of the membrane, which turned out to be particularly advantageous in practice.

According to the invention the total thickness of the membrane may be in the range of 6 to 11 mm, preferably 5 to 10 mm and especially 8 mm.

Further, according to the invention the first material layer and the second material layer are advantageously made of bitumen such as styrene-butadiene-styrene modified bitumen or oxide bitumen.

Finally, according to the invention said "one material layer" is advantageously avoided and the layer of adhesive mixture is placed directly on the building structure.

The invention is described below with reference to the accompanying drawing, in which
Figure 1 is a vertical sectional view of a damp-proofing and/or corrosion-protecting membrane according to the invention,
Figure 2 is a cross-sectional view of an embodiment of the membrane, where the layer of adhesive mixture is layed directly on the building structure,
Figure 3 illustrates a membrane corresponding to Figure 1, but whereby the second material layer has been provided with a reinforcement on its bottom side,
Figure 4 illustrates a membrane corresponding to Figure 1, but whereby the first material layer has been provided with a reinforcement on its top side,
Figure 5 illustrates a membrane corresponding to Figure 1, but whereby both the top side of the first material layer and the bottom side of the second material layer have been provided with a reinforcement, and
Figure 6 illustrates a membrane corresponding to Figure 2, but whereby the second material layer has been provided with a reinforcement on its bottom side.

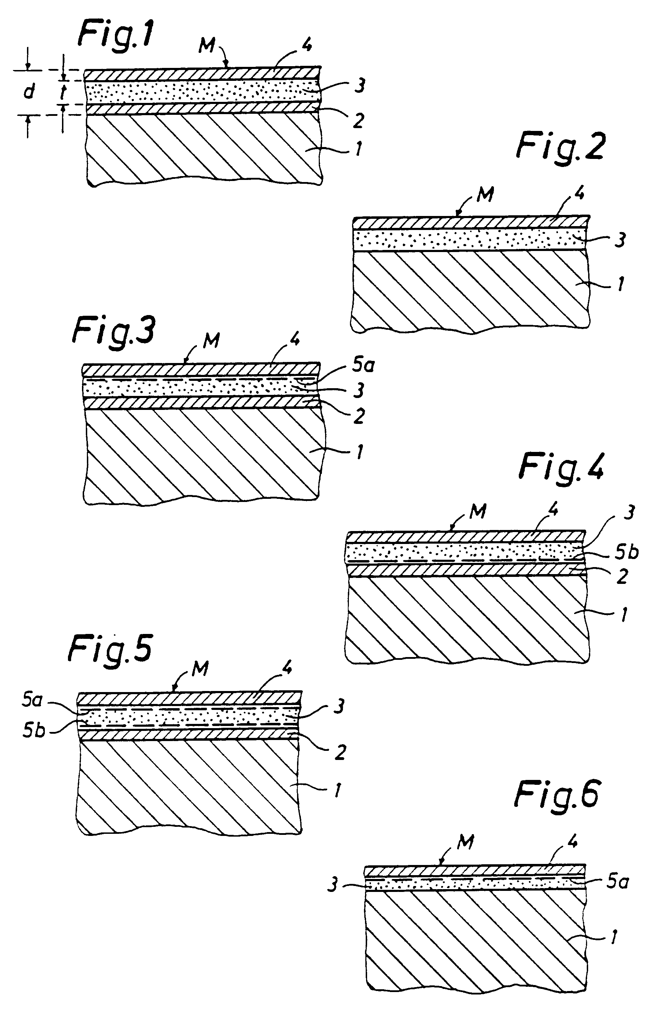

The membrane M shown Figure 1 is produced by a first material layer 2 in form of for instance roof felt being layed out on a portion of a building structure 1, such as for instance a roof, a bridge or a pipeline. The first material layer may be in form of many other materials too. The material layer 2 is applied in a conventional manner either mechanically or by means of adhesive onto the building structure. A layer of cold flow, damp-proofing and/or corrosion-protecting, reaction-setting bitumen-based adhesive mixture 3 is layed in situ directly on the first material layer 2. The adhesive mixture 3 is of a thickness t corresponding to 10 to 80% of the total thickness d of the membrane M, the latter thickness being in the range of from 2 to 16 mm. The adhesive mixture is of a thick to pasty consistency. Subsequently, a second material layer 4 is layed directly on the layer 3 of adhesive mixture 3, said second material layer for instance also being made of roof felt. The second material layer 4 must be layed out before the layer 3 has set.

As illustrated in Figure 2, the first material layer 2 may be omitted. It is possible to lay the layer of adhesive mixture directly on the building structure 1 and then lay the second material layer 4.

The adhesive mixture used for the layer 3 comprises at least one reaction-initiating component being added to the adhesive mixture before the latter is to be layed out.

The adhesive mixture may for instance comprise 63.7% by weight of bitumen and 33.5% by weight of hydroxyl-terminated polybutadiene of an average molecular weight of 2000 to 6000 as well as 2.7% by weight of polydiphenylmethane-4,4-diisocyanate as reaction-initiating component. The layer 3 is never subjected to a flame because such a procedure may cause an injurious formation of fumes. However, assisting heat may be provided by means of electric heaters, such as an electric heat carpet, being moved around on the structure.

The adhesive mixture 3 can in addition to bitumen also comprise blocked bitumen-compatible polyol compounds and a reaction-initiating component in form of polyisocyanate compounds or polyisocyanate prepolymers.

It is also possible that the used adhesive mixture 3 in addition to bitumen can comprise blocked polyisocyanate compounds or polyisocyanate prepolymers and a reaction-initiating component in form of bitumen-compatible polyoles.

In order to control the setting time which can last from minutes to hours, it is furthermore advantageous that the used adhesive mixture in addition to bitumen can comprise both blocked polyisocyanates and/or blocked amines or blocked amine compounds, such as ketimines or alkanol amines with α-β-unsaturated carbonyl compounds, and bitumen-compatible polyisocyanate compounds or polyisocyanate prepolymers or epoxy and/or epoxypolyurethane compounds as reaction-initiating component. The adhesive mixture comprises for instance 11.1% by weight of bitumen, 10.0% by weight of ketimine, 11.1% by weight of process oil, 1.1% by weight of accelerator, and 44.5% by weight of blocked polyisocyanate together with 22.2% by weight of unmodified epoxy resin as reaction-initiating component.

As illustrated in Figure 3, the second material layer 4 can on its bottom side be provided with a reinforcement 5a, preferably of woven or felted bitumen-compatible products, such as polyester tissue, possessing a high resistance to weather effects.

Figure 4 illustrates how the first material layer 2 can be provided on its top side with a second reinforcement 5b, preferably of woven or felted bitumen-compatible products, which like the reinforcement 5a is preferably made of polyester tissue possessing a high resistance to weather effects.

Figure 5 illustrates how both the second material layer 4 and the first material layer 2 can be provided with reinforcements 5a and 5b. These reinforcements are preferably also of polyester tissue.

Figure 6 illustrates how the bottom side of the second material layer 4 can be provided with a reinforcement 5a.

In the modifications of the membrane M illustrated in Figures 1, 3, 4, and 5, the first material layer 2 can be an old roof felt layed a long time ago on the building structure 1. Accordingly, the old roof felt is thereby reused.

The layer 3 of adhesive mixture is preferably layed out in a thickness t of 30 to 70% of the total thickness d of the membrane M, especially in a thickness t of 45 to 55% of d, and particularly preferred in a thickness t of approximately 50% of d.

The total thickness d of the membrane M is advantageously in the range 6 to 11 mm, preferably 5 to 10 mm, and especially 8 mm.

The material layer 2 can comprise 1 to 4 mm of SBS bitumen, on top of which polyester felt of a % by weight of 60 to 250 g/m² can be placed as reinforcement 5b. The material layer 4 can comprise 1 to 6 mm SBS bitumen, below which a reinforcement 5b of a % by weight of 60 to 250 g/m² can be provided. The reinforcements 5a and 5b may optionally be impregnated with the bitumen of the layers 2 and 4. The second material layer 4 can be provided with minerals strewn on its top side.

The term "reaction-setting" refers both to chemical and to physical processes.

## Claims

1. A method of producing a damp-proofing and/or corrosion-protecting membrane (M) on building structures (1), such as roofs, bridges or pipelines, said membrane comprising at least one material layer (2, 4) of for instance roof felt, a layer of cold flow, damp-proofing and/or corrosion-protecting, reaction-setting, bitumen-based adhesive mixture (3) placed in situ on the first material layer (2), and a second material layer (4) placed on top of the layer (3) of adhesive mixture prior to the setting of the latter, the layer of adhesive mixture being of a thick pasty consistancy as it is laid, characterised in that the layer of adhesive mixture (3) has a thickness (t) corresponding to 10 to 80% of the total thickness (d) of the membrane (M), the latter thickness being in the range of 2 to 16 mm, the adhesive mixture (3) further comprising at least one blocked component X and at least one reaction-initiating component Y, the latter being added to the adhesive mixture just before the latter is to be layed out, X being selected from the group consisting of blocked bitumen-compatible polyol compounds, blocked polyisocyanate compounds, blocked polyisocyanate prepolymers, blocked polyisocyanates, blocked amines, blocked amine compounds, and mixtures thereof, and Y being selected from a group consisting of polyisocyanate compounds, polyisocyanate prepolymers, bitumen-compatible polyoles, bitumen-compatible polyisocyanate compounds, bitumen-compatible polyisocyanate prepolymers, bitumen-compatible epoxy compounds, bitumen-compatible epoxy polyurethane compounds, and mixtures thereof.

2. A method as claimed in claim 1, characterised in that the blocked component of the adhesive mixture (3) comprises blocked bitumen-compatible polyol compounds and that the reaction-initiating component of the adhesive mixture comprises polyisocyanate compounds or polyisocyanate prepolymers.

3. A method as claimed in claim 1, characterised in that the blocked component of the adhesive mixture (3) comprises blocked polyisocyanate compounds or polyisocyanate prepolymers and that the reaction-initiating component comprises bitumen-compatible polyoles.

4. A method as claimed in claim 1, characterised in that the blocked component of the adhesive mixture (3) comprises blocked polyisocyanate and/or blocked amines and/or blocked amine compounds, such as ketimines or alkanol amines with α-β-unsaturated carbonyl compounds, and that the reaction-initiating component comprises bitumen-compatible polyisocyanate compounds or polyisocyanate prepolymers or epoxy and/or epoxypolyurethane compounds.

5. A method as claimed in claim 1, characterised in that the second material layer (4) is provided on its bottom side with a reinforcement (5a) preferably made of woven or felted bitumen-compatible products, such as polyester tissue, possessing a high resistance to weather effects, and that the reinforcement has optionally been impregnated with the same material as the material of the second material layer (2).

6. A method as claimed in claim 1, characterised in that the first material layer (2) is provided on its top side with a second reinforcement (5b) preferably made of woven or felted bitumen-compatible products, such as polyester tissue, possessing a high resistance to weather effects, and that the reinforcement has optionally been impregnated with the same material as the material of the second material layer.

7. A method as claimed in claim 1 or 6, characterised in that the first material layer (2) is constituted by an old covering material, such as roof felt, used for a long time on the structure where the membrane is to be produced.

8. A method as claimed in one or more of the preceding claims 1 to 7, characterised in that the adhesive mixture (3) has a thickness (t) of 30 to 70% of the total thickness (d) of the membrane.

9. A method as claimed in one or more of the preceding claims 1 to 8, characterised in that the adhesive mixture (3) has a thickness (t) of 45 to 55%, preferably approximately 50%, of the total thickness (d) of the membrane.

10. A method as claimed in one or more of the preceding claims 1 to 9, characterised in that the total thickness (d) of the membrane is in the range of 6 to 11 mm, preferably 5 to 10 mm, and especially 8 mm.

11. A method as claimed in one or more of the preceding claims 1 to 10, characterised in that the first material layer (2) and the second material layer (4) are made of bitumen, such as styrene-butadiene-styrene modified bitumen or oxide bitumen.

12. A method as claimed in one or more of the preceding claims 1 to 11 characterised in that said "one material layer" is avoided and the layer of adhesive mixture is placed directly on the building structure.

## Patentansprüche

1. Verfahren zur Herstellung einer feuchtigkeitsfesten und/oder korrosionsschützenden Membran (M) für Baustrukturen (1) wie Dächer, Brücken oder Pipelines, wobei die Membran wenigstens eine Materialschicht (2, 4), zum Beispiel Dachpappe, eine Schicht einer kaltfließenden, feuchtigkeitsfesten und/oder korrosionsschützenden, reaktionsabbindenden, in situ auf der ersten Materialschicht (2) aufgebrachten Klebeschicht (3) auf Bitumen-Basis und eine zweite Materialschicht (4) umfaßt, die auf die Schicht (3) der Klebemischung vor dem Abbinden der letzteren aufgebracht wird, wobei die Schicht der Klebemischung, wenn sie verlegt wird, eine dicke pastenartige Konsistenz hat, dadurch gekennzeichnet, daß die Schicht der Klebemischung (3) eine Dicke (t) aufweist, die 10 bis 80 % der Gesamtdicke (d) der Membran (M) entspricht, wobei letztere Dicke im Bereich von 2 bis 16 mm liegt und die Klebemischung (3) weiterhin wenigstens eine blockierte Komponente X und wenigstens eine reaktionsauslösende Komponente Y umfaßt, wobei letztere gerade vor dem Verlegen der Klebemischung zu dieser hinzugefügt wird, X aus der aus blockierten bitumenverträglichen Polyol-Verbindungen, blockierten Polyisocyanat-Verbindungen, blockierten Polyisocyanat-Prepolymeren, blockierten Polyisocyanaten, blockierten Aminen, blockierten Amin-Verbindungen und Mischungen davon bestehenden Gruppe ausgewählt ist und Y aus einer aus Polyisocyanat-Verbindungen, Polyisocyanat-Prepolymeren, bitumenverträglichen Polyolen, bitumenverträglichen Polyisocyanat-Verbindungen, bitumenverträglichen Polyisocyanat-Prepolymeren, bitumenverträglichen Epoxy-Verbindungen, bitumenverträglichen Epoxy-Polyurethan-Verbindungen und Mischungen daraus bestehenden Gruppe ausgewählt ist.

2. Verfahren nach Anspruch 1, dadurch gekennzeichnet, daß die blockierte Komponente der Klebemischung (3) blockierte bitumenverträgliche Polyol-Verbindungen umfaßt und daß die reaktionsauslösende Komponente der Klebemischung Polyisocyanat-Verbindungen oder Polyisocyanat-Prepolymere umfaßt.

3. Verfahren nach Anspruch 1, dadurch gekennzeichnet, daß die blockierte Komponente der Klebemischung (3) blockierte Polyisocyanat-Verbindungen oder Polyisocyanat-Prepolymere umfaßt und daß die reaktionsauslösende Komponente bitumenverträgliche Polyole umfaßt.

4. Verfahren nach Anspruch 1, dadurch gekennzeichnet, daß die blockierte Komponente der Klebemischung (3) blockierte Polyisocyanate und/oder blockierte Amine und/oder blockierte Amin-Verbindungen wie Ketimine oder Alkanolamine mit α-β-ungesättigten Carbonyl-Verbindungen umfaßt und daß die reaktionsauslösende Verbindung bitumenverträgliche Polyisocyanat-Verbindungen oder Polyisocyanat-Prepolymere oder Epoxy- und/oder Epoxypolyurethan-Verbindungen umfaßt.

5. Verfahren nach Anspruch 1, dadurch gekennzeichnet, daß die zweite Materialschicht (4) auf ihrer Unterseite mit einer vorzugsweise aus gewebten oder filzigen bitumenverträglichen, eine hohe Widerstandsfähigkeit gegenüber Witterungseinflüssen aufweisenden Produkten wie Polyester-Gewebe hergestellten Verstärkung (5a) ausgestattet ist und daß die Verstärkung wahlweise mit demselben Material wie dem Material der zweiten Materialschicht (2) imprägniert worden ist.

6. Verfahren nach Anspruch 1, dadurch gekennzeichnet, daß die erste Materialschicht (2) auf ihrer Oberseite mit einer zweiten, vorzugsweise aus gewebten oder filzigen bitumenverträglichen, eine hohe Widerstandsfähigkeit gegenüber Witterungseinflüssen aufweisenden Produkten wie Polyester-Geweben hergestellten Verstärkung (5b) ausgestattet ist und daß die Verstärkung wahlweise mit demselben Material wie dem Material der zweiten Materialschicht (2) imprägniert worden ist.

7. Verfahren nach Anspruch 1 oder 6, dadurch gekennzeichnet, daß die erste Materialschicht (2) aus einem alten Abdeckmaterial wie Dachpappe besteht, das eine lange Zeit auf der Struktur, auf der die Membran hergestellt werden soll, verwendet wurde.

8. Verfahren nach einem oder mehreren der vorhergehenden Ansprüche 1 bis 7, dadurch gekennzeichnet, daß die Klebemischung (3) eine Dicke (t) von 30 bis 70 % der Gesamtdicke (d) der Membran aufweist.

9. Verfahren nach einem oder mehreren der vorhergehenden Ansprüche 1 bis 8, dadurch gekennzeichnet, daß die Klebemischung (3) eine Dicke (t) von 45 bis 55 % der Gesamtdicke (d) der Membran , vorzugsweise von ungefähr 50 %, aufweist.

10. Verfahren nach einem oder mehreren der vorhergehenden Ansprüche 1 bis 9, dadurch gekennzeichnet, daß die Gesamtdicke (d) der Membran im Bereich von 6 bis 11 mm, vorzugsweise von 5 bis 10 mm und insbesondere bei 8 mm liegt.

11. Verfahren nach einem oder mehreren der vorhergehenden Ansprüche 1 bis 10, dadurch gekennzeichnet, daß die erste Materialschicht (2) und die zweite Materialschicht (4) aus Bitumen, wie aus mit Styrol-Butadien-Styrol modifiziertem Bitumen oder aus Oxid-Bitumen, hergestellt sind.

12. Verfahren nach einem oder mehreren der vorhergehenden Ansprüche 1 bis 11, dadurch gekennzeichnet, daß die "Schicht aus einem Material" weggelassen wird und daß die Schicht aus Klebematerial direkt auf die Baustruktur aufgebracht wird.

## Revendications

1. Procédé pour former une membrane (M), étanche à la vapeur et anti-corrosion, sur des structures (1) de construction, telles que des toits, des ponts ou des canalisations, ladite membrane comprenant au moins une couche (2, 4) de matériau, par exemple un feutre de toit, une couche d'un mélange adhésif (3) à base de bitume, durcissant par réaction, imperméable à la vapeur et/ou anti-corrosion, fluide à froid, un mélange adhésif (3), à base de bitume, placée in situ sur la première couche (2) de matériau, et une seconde couche (4) de matériau placée sur le dessus de la couche (3) d'un mélange adhésif, avant le durcissement de ce dernier, la couche de mélange adhésif ayant la consistance épaisse d'une pâte lorsqu'on l'applique, caractérisé en ce que la couche de mélange adhésif (3) a une épaisseur (t) correspondant à 10-80% de l'épaisseur totale (d) de la membrane (M), cette dernière épaisseur étant comprise entre 2 et 16 mm, le mélange adhésif (3) comprenant, en outre, au moins un composant bloqué X et et au moins un composant Y amorçant la réaction, celui-ci étant ajouté au mélange adhésif juste avant que ce dernier soit appliqué, le composant X étant choisi parmi le groupe comprenant les composés du type polyol bloqué, compatibles avec le bitume, les composés du type polyisocyanate bloqué, les prépolymères du type polyisocyanate bloqué, les polyisocyanates bloqués, les amines bloquées, les composés aminés bloqués, et leurs mélanges, et le composant Y étant choisi parmi un groupe comprenant les composés du type polyisocyanate, le polyisocyanate, les prépolymères du type polyisocyanate, les polyols compatibles avec le bitume, les composés à base de polyisocyanate compatibles avec le bitume, les prépolymères du type polyisocyanate compatibles avec le bitume, les composés époxy compatibles avec le bitume, les composés époxydés compatibles avec le bitume, et leurs mélanges.

2. Procédé selon la revendication 1, caractérisé en ce que le composant bloqué du mélange adhésif (3) comprend les composés du type polyol bloqué, compatibles avec le bitume, et en ce que le composant amorçant la réaction du mélange adhésif comprend les composés du type isocyanate ou les prépolymères du type polyisocyanate.

3. Procédé selon la revendication 1, caractérisé en ce que le composant bloqué du mélange adhésif (3) comprend les composés du type polyisocyanate bloqué ou les prépolymères du type polyisocyanate et en ce que le composant amorçant la réaction comprend les polyols compatibles avec le bitume.

4. Procédé selon la revendication 1, caractérisé en ce que le composant bloqué du mélange adhésif (3) comprend le polyisocyanate bloqué et/ou les amines bloquées et/ou les composés aminés bloqués, tels que la cétimine ou l'alcanolamine avec des composés carbonylés α, β, insaturés et en ce que le composant amorçant la réaction comprend les composés du type polyisocyanate compatibles avec le bitume ou le prépolymère à base de polyisocyanate ou les composés époxy et/ou époxy polyuréthane.

5. Procédé selon la revendication 1, caractérisé en ce que la seconde couche (4) de matériau est munie, sur son côté inférieur, d'un renforcement (5a) formé, de préférence, de produits tissés ou du type feutre compatibles avec le bitume, tels que le tissu de polyester, possédant une résistance élevée aux effets des intempéries, et en ce que le renforcement est, facultativement, imprégné avec le même matériau que le matériau de la seconde couche (2) de matériau.

6. Procédé selon la revendication 1, caractérisé en ce que la première couche (2) de matériau est munie, sur son côté de dessus, d'un second renforcement (5b) formé, de préférence, de produits tissés ou du type feutre compatibles avec le bitume, tels qu'un tissu de polyester, possédant une résistance élevée aux effets des intempéries, et en ce que le renforcement est facultativement imprégné avec le même matériau que le matériau de la seconde couche de matériau.

7. Procédé selon la revendication 1 ou 6, caractérisé en ce que la première couche (2) de matériau est constituée par un matériau de recouvrement usagé, tel qu'un feutre de toit, utilisé depuis longtemps sur la structure où la membrane doit être formée.

8. Procédé selon une ou plusieurs des revendications 1 à 7, caractérisé en ce que le mélange adhésif (3) a une épaisseur (t) correspondant à 30-70% de l'épaisseur totale (t) de la membrane.

9. Procédé selon une ou plusieurs des revendications 1 à 8, caractérisé en ce que le mélange adhésif (3) a une épaisseur (t) correspondant à 45-45%, de préférence à peu près à 50%, de l'épaisseur totale (d) de la membrane.

10. Procédé selon une ou plusieurs des revendications 1 à 9, caractérisé en ce que l'épaisseur totale (d) de la membrane est comprise entre 6 et 11 mm, de préférence entre 5 et 10 mm, et étant spécialement de 8 mm.

11. Procédé selon un ou plusieurs des revendications 1 à 10, caractérisé en ce que la première couche (2) de matériau et la seconde couche (4) de matériau sont formées de bitume, tel que du bitume oxydé ou du bitume modifié styrène-butadiène-styrène.

12. Procédé selon une ou plusieurs des revendications 1 à 11, caractérisé en ce que ladite "au moins une couche de matériau" est évitée et la couche de mélange adhésif est placée directement sur la structure de construction.
